# EUROPEAN PATENT APPLICATION

(11) **EP 4 717 084 A1**
(43) Date of publication of application: **01.04.2026**
(21) Application number: 25198547.9
(22) Date of filing: 27.08.2025
(51) Int. Cl.: A01K 15/02, F16L 37/10, F16L 25/00, F16L 33/12

(54) **ANIMAL TUNNEL SYSTEM**

(30) Priority: 29.08.2024 GB 202412648
(71) Applicant: Hebe Studio Limited, Banbury, Oxfordshire OX16 5HX (GB)
(72) Inventor: DAVIES, Josh, Banbury, OX16 5HX (GB); MIGHALL, Jack, Banbury, OX16 5HX (GB)
(74) Representative: Milhench, Mark Lorne

(57) **Abstract**

This disclosure relates, in one aspect, to an animal tunnel system comprising a plurality of tunnel lengths 53, 55; which tunnel lengths can be coupled together by means of connectors 1 of the type disclosed herein.

Another aspect of this disclosure relates to an animal tunnel connector 1 for connecting a first length of animal tunnel 53 to a second length of animal tunnel 55, the connector comprising: a collar 5 comprising first and second segments 15, 21 each having a proximal end 19, 25 and a distal end 17, 23, wherein the distal end 17 of said first segment 15 is movably coupled to the distal end 23 of said second segment 21 so that the collar 5 can be opened and closed, the proximal ends 19, 25 of said first and second segments 15, 21 include respective parts of a releasable two-part engagement mechanism that can be engaged when the collar 5 is closed to retain the collar in the closed position, and the first and second segments of said collar each include first and second tunnel engaging formations 9, 11 that enable the collar to be closed around and retain respective first ends of said first and second lengths of animal tunnel 53, 55; wherein said closed collar comprises a cylinder that defines an opening of diameter D, and a distance A between the distal 17 and proximal 19 ends of the first segment 15 is less than D; the arrangement being such that said collar 5 can be resiliently deformed to receive and retain a said first end of one of said lengths of animal tunnel pushed into said first segment 15 to temporarily couple the collar 5 to said one length of animal tunnel before the collar 5 is coupled to the other said length of animal tunnel.

An animal tunnel system is also disclosed.

## Description

### Field

This disclosure relates, in one aspect, to animal tunnel systems for pet enclosures - particularly, but not exclusively, to tunnel systems for small animals such as gerbils, hamsters, mice, rats and other similar rodents. Another aspect of the disclosure relates to a connector for such a tunnel system, and a yet further aspect of the disclosure relates to a tunnel length for such a tunnel system.

### Background

In order to avoid boredom, and ultimately depression, it is important for pet animals to be entertained and kept interested. One way to do this is to adapt their living enclosure so as to make it more interesting, for example by placing objects and toys inside their enclosure. Another way is to adapt the enclosure itself so as to make it more interesting for the pets that inhabit it.

Our previously proposed Zippi^{™} tunnel system is a good example of one way to make a pet's enclosure more interesting. The Zippi^{™} tunnel system can be employed to join a pet's hutch or cage to an outdoor run, so that a pet can easily move as and when they want to from their hutch or cage to a run area where they can interact with their owner, or with toys placed in the run.

The Zippi^{™} tunnel system comprises a tunnel that typically includes a plurality of individual tunnel lengths that are coupled together by tunnel connectors of the type disclosed in United Kingdom Patent no. 2570702. One end of the tunnel is coupled to the hutch by means of an animal enclosure coupling of the type disclosed in United Kingdom Patent no. 2608959, and the other end of the tunnel is coupled to a run by means of a suitable run coupling.

Whilst the Zippi^{™} tunnel system is ideal for connecting a rabbit or guinea pig hutch to a run where the tunnel tends to run in one dimension (typically along the ground, and hence at least generally horizontally), the teachings of the Zippi^{™} tunnel system are less well suited for tunnel systems of the type that are often employed to connect areas of small animal enclosures (such as gerbil, hamster or other rodent enclosures) where the tunnel typically extends in multiple dimensions, for example horizontally, vertically and at angles in between.

One reason for this is that whilst assembling the Zippi^{™} tunnel system it is relatively easy for one person to lay one tunnel section on a tunnel connector that has been placed on the ground, and then lay a second tunnel section on that connector, before subsequently fastening the connector around both tunnel sections to couple them together.

In contrast, in the context of a vertically extending tunnel or a tunnel that extends at an angle to or from the horizontal, it is difficult for one person to assemble the tunnel as one person does not have enough hands to hold both tunnels in position and then do up the clip. This is a particular problem for those who are less dextrous, for example for younger children.

Aspects of this disclosure have been devised with the foregoing in mind.

### Summary

In one presently preferred implementation of the teachings of this disclosure there is provided an animal tunnel connector for connecting a first length of animal tunnel to a second length of animal tunnel, the connector comprising: a collar comprising an annular peripheral wall, said collar including first and second segments each having a proximal end and a distal end, wherein the distal end of said first segment is movably coupled to the distal end of said second segment so that the collar can be opened and closed, the proximal ends of said first and second segments include respective parts of a releasable two-part engagement mechanism that can be engaged when the collar is closed to retain the collar in the closed position, and the first and second segments of said collar each include first and second tunnel engaging formations that enable the collar to be closed around and retain respective first ends of said first and second lengths of animal tunnel; wherein the annular peripheral wall of the closed collar has a diameter D, and a distance A between the distal and proximal ends of the first segment is less than D; the arrangement being such that said collar can be resiliently deformed to receive and retain a said first end of one of said lengths of animal tunnel pushed into said first segment to temporarily couple the collar to said one length of animal tunnel before the collar is coupled to the other said length of animal tunnel.

One illustrative advantage of this arrangement is that a person assembling the animal tunnel no longer needs to hold both tunnel lengths, and then somehow fit the connector around them. That person can instead fit the connector to one tunnel length and then, whilst the first tunnel length is retained in the connector, fit the connector to the other tunnel length. This arrangement greatly simplifies the assembly process, particularly when a multi-dimensional tunnel is being constructed.

In one implementation said first and second segments are each generally C-shaped. In one implementation, the first segment - as measured from the distal end to the proximal end - comprises an arc having a length that is greater than πD/2. The second segment - as measured from the distal end to the proximal end- may comprise an arc having a length that is less than πD/2. The second segment may comprise - at least approximately - a half-circle, that is to say an arc extending through 180 degrees. The first segment may comprise an arc extending through more than 180 degrees, for example approximately 200 - 215 degrees (preferably c. 205 degrees).

In one arrangement proximal end portions of said first and second segments are radially thinned in comparison to the remainder of said first and second segments, respectively. The proximal end portions of said first and second segments may overlap when the collar is in the closed position. The proximal end portion of said first segment may include a first part of said releasable two-part engagement mechanism, and the proximal end portion of said second segments may include a second part of said releasable two-part engagement mechanism, said first and second parts engaging as the collar is closed to retain the collar in the closed position.

Another aspect of this disclosure relates to an animal tunnel length for an animal tunnel system, the animal tunnel length comprising first and second tunnel portions that can be brought together to form a tubular structure that provides a tunnel through which an animal can pass. The first and second tunnel portions may each be semi-circular so that the assembled tubular structure is circular in cross-section. The first and second tunnel portions may include ventilation holes.

The first and second tunnel portions may be internally ribbed. The internal ribs on said first and second tunnel portions may co-operate to form a plurality of circumferential ribs when the tunnel portions are brought together to form said tubular structure.

The first and second tunnel portions may include respective parts of a two-part engagement mechanism that helps keep the tunnel portions together when assembled to form said tubular structure. The first and second tunnel portions may be configured so that peripheral end regions of the tubular structure that is formed when the tunnel portions are brought together are radially narrowed to provide an entrance to the tunnel length that has a smaller diameter than the remainder of the tunnel length between the end regions.

The animal tunnel length may further comprise a circumferential rib or ridge that extends radially outwardly from the aforementioned end regions of the tunnel length when the tunnel portions are brought together. Said rib or ridge may be configured to be engaged by at least one of the tunnel engaging formations of the connector disclosed herein. The circumferential rib or ridge may have a diameter B that is, at least approximately, similar to the diameter D of said annular peripheral wall and greater than the distance A between the proximal and distal ends of the first segment of the collar.

Another aspect of this disclosure relates to an animal tunnel system for an animal enclosure, the tunnel system comprising: a plurality of animal tunnel lengths of the type disclosed herein, and a plurality of animal tunnel connectors of the type disclosed herein, the arrangement being such that the animal tunnel connectors can be used to connect animal tunnel lengths to form an animal tunnel for connection between spaced locations of an animal enclosure, or between spaced animal enclosures.

The tunnel system may further comprise first and second animal enclosure couplings that can be connected to one or more enclosures, an assembled tunnel being connectable between the animal enclosure couplings to provide a tunnel that extends between them.

Viewed from a different perspective, one illustrative implementation of the teachings of this disclosure provides an animal tunnel connector for connecting a first length of animal tunnel to a second length of animal tunnel, the animal tunnel connector comprising a cylindrical collar that can be opened and closed, the collar having first and second C-shaped segments, a first of said segments defining an arc that extends through more than 180 degrees so that a distance between proximal and distal ends of said first segment is less than a diameter of said cylindrical collar.

Other advantages and aspects of the heat transfer system disclosed herein will be apparent from the detailed description provided below.

### Brief Description of the Drawings

The teachings of this disclosure, and arrangements embodying those teachings, will hereafter be described by way of illustrative example with reference to the accompanying drawings, in which:
Fig. 1 is a schematic isometric view of a closed animal tunnel connector;
Fig 2 is a schematic isometric view of the animal tunnel connector of Fig. 1 in an open configuration;
Fig. 3 is a plan view of the connector of Figs. 1 and 2 in an open configuration;
Fig. 4 is an isometric view of a tunnel length;
Fig. 5 is a side elevation of the tunnel length shown in Fig. 4;
Fig. 6 is an isometric view of the tunnel length of Fig. 4 in an open configuration;
Fig. 7, is an enlarged view of a part of an end of the tunnel shown in Fig. 4;
Fig. 8 is an isometric view of a tunnel length with a connector attached to one end, and
Fig. 9 is a sketch of two tunnel lengths that are about to be connected together.

### Detailed Description

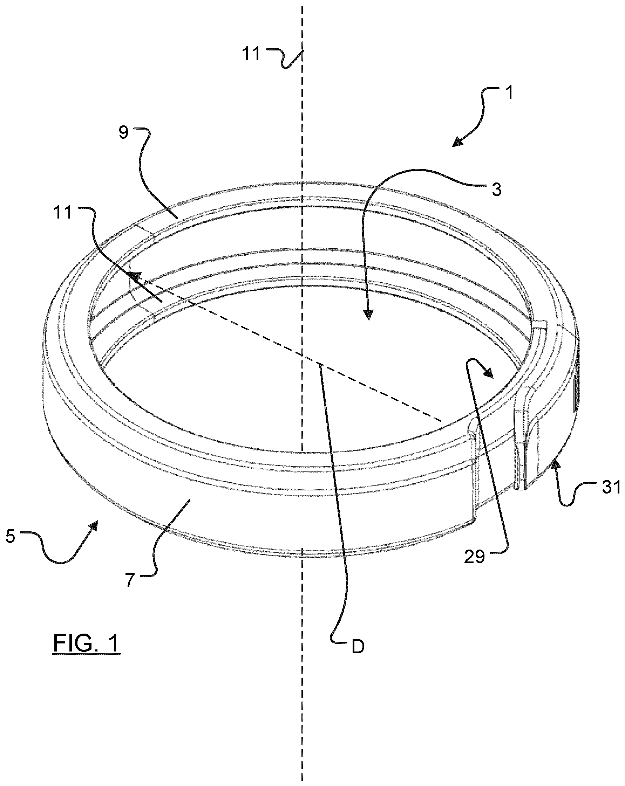

As mentioned above, Fig. 1 is a schematic isometric view of an animal tunnel connector 1 that embodies the teachings of this disclosure. In the closed configuration depicted in Fig. 1, the connector 1 is generally cylindrical and defines a central bore, channel or passageway 3.

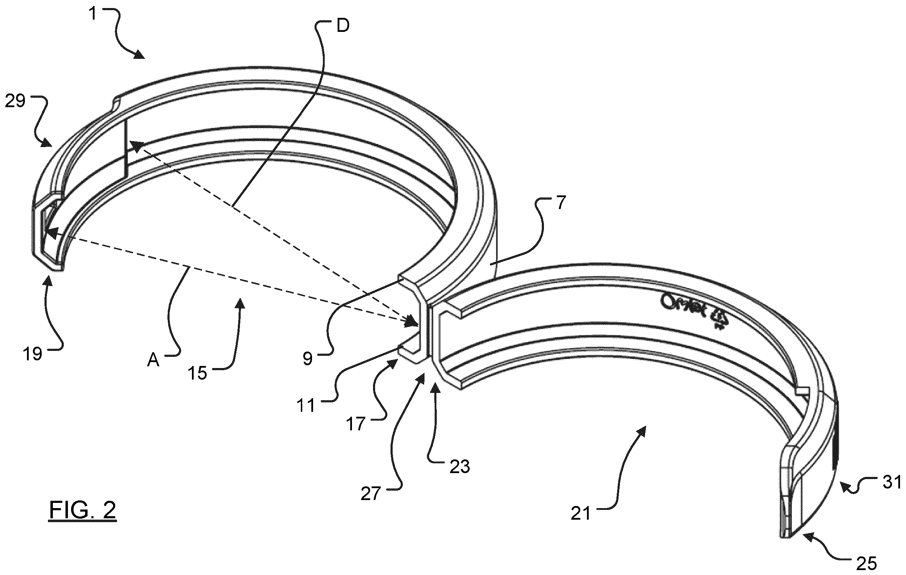

The connector 1 comprises a collar 5 with an annular peripheral wall 7 of diameter D (best shown in Fig. 2) when closed. The collar further comprises first and second tunnel engaging formations 9, 11 that extend inwardly from opposite edges of the peripheral wall. In this particular arrangement, the tunnel engaging formations each comprise a ridge (rib, lip or wall) 9, 11 extending inwardly from respective opposite edges of the peripheral wall 7, so that the collar 5 is generally C-shaped in transverse cross-section (that is to say, in a direction generally parallel to a notional axial line 13).

Referring additionally to Fig. 2, in which the connector 1 is shown in an open configuration, the collar 5 comprises a first segment 15 that has a distal end 17 and a proximal end 19, and a second segment 21 that also comprises a distal end 23 and a proximal end 25. The first and second segments 15, 21 are generally C-shaped in plan view, and the distal ends 17, 23 of the first and second segments 15, 21 are moveably coupled to one another, for example by means of a hinge 27. In one envisaged implementation, the hinge 27 may comprise a so-called living hinge.

As shown in Fig. 2, the first segment 15 is larger than the second segment 21. That is to say, the first segment - as measured from the distal end 17 to the proximal end 19 - comprises an arc having a length that is greater than πD/2, which means of course that the second segment - as measured from the distal end 23 to the proximal end 25 - comprises an arc having a length that is less than πD/2. By virtue of this arrangement, a distance A between the proximal 19 and distal ends 17 of the first segment 15 (equivalent to a chord of the annular peripheral wall when the collar is closed) is less than the diameter D of the annular peripheral wall 7.

In the particular implementation depicted in Fig. 2, the second segment comprises - at least approximately - a half-circle, that is to say an arc extending through 180 degrees. The first segment, in contrast, comprises an arc extending through more than 180 degrees, in this particular case approximately 200 - 215 degrees (preferably c. 205 degrees). As the first segment comprises an arc that extends through more than 180 degrees, the space (chord) between the proximal and distal ends of the first segment is less than the diameter of the annular peripheral wall of the closed collar.

A proximal end portion 29 of the first segment 15 and a proximal end portion 31 of the second segment 21 are locally radially thinned so that, in the closed configuration depicted in Fig. 1, the proximal end portions 29, 31 of the first and second segments 15, 21 overlap. The proximal end portions 29, 31 of said first and second segments include respective parts of a releasable two-part engagement mechanism that can be engaged when the collar is closed to retain the collar in the closed position.

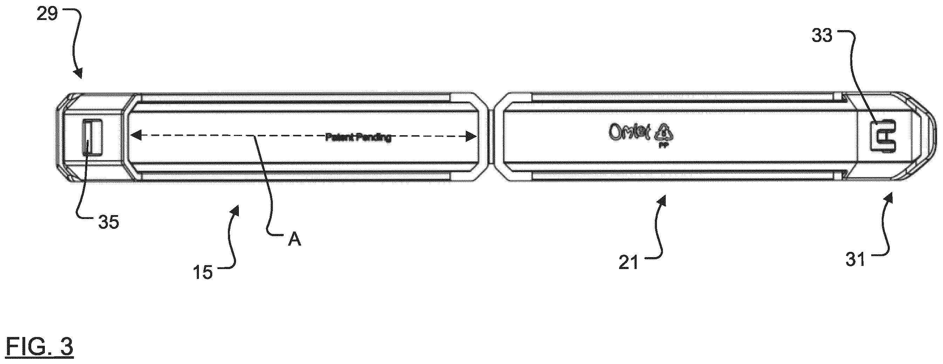

Referring additionally to Fig. 3, in one envisaged implementation, the releasable two-part engagement mechanism may comprise a ramped projection carried by one proximal end portion that engages with a slot formed in the other proximal end portion. For example, in one implementation, the proximal end portion 31 of the second segment 21 may comprise a ramped projection 33 that locates in a slot 35 provided in the proximal end portion 29 of the first segment 15 when the end portions are overlapped.

It is envisaged that the collar is formed of a resilient material, for example a plastics material, so that as the proximal end portions of the first and second segments are brought together, the proximal end portion 31 of the second segment 21 can resiliently flex in a radially outward direction as the ramped projection 33 slides over the proximal end portion 29 of the first segment 15, until the ramped portion 33 reaches the slot 35 whereupon the second segment moves radially inwardly to engage the ramped portion 33 with the slot 35 and secure the connector in the closed position.

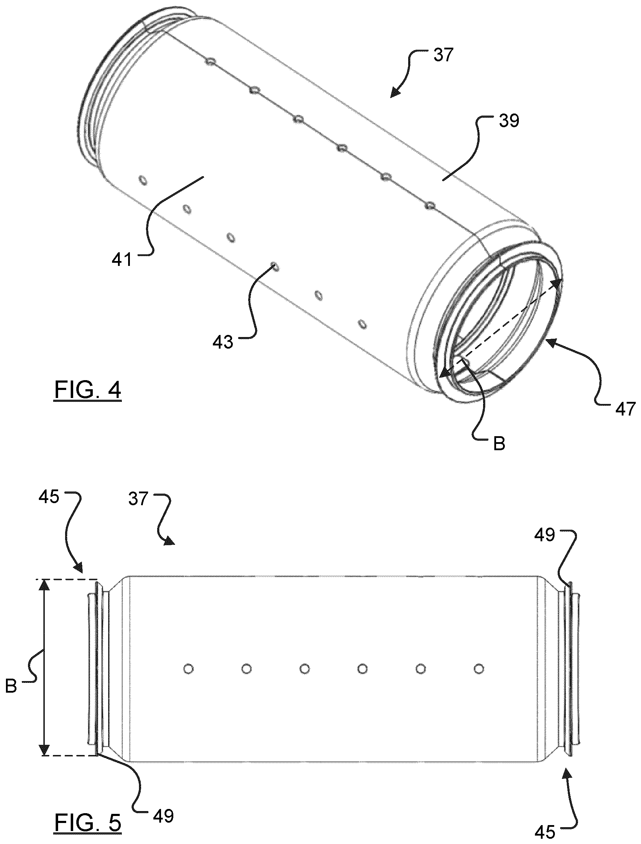

Referring now to Figs. 4 and 5 of the drawings, the aforementioned connector 1 of the animal tunnel system is configured and arranged for coupling together animal tunnel lengths (or sections) 37 of the type shown in Figs. 4 and 5 (where Fig 4 is an illustrative isometric view, and Fig. 5 is a side elevation).

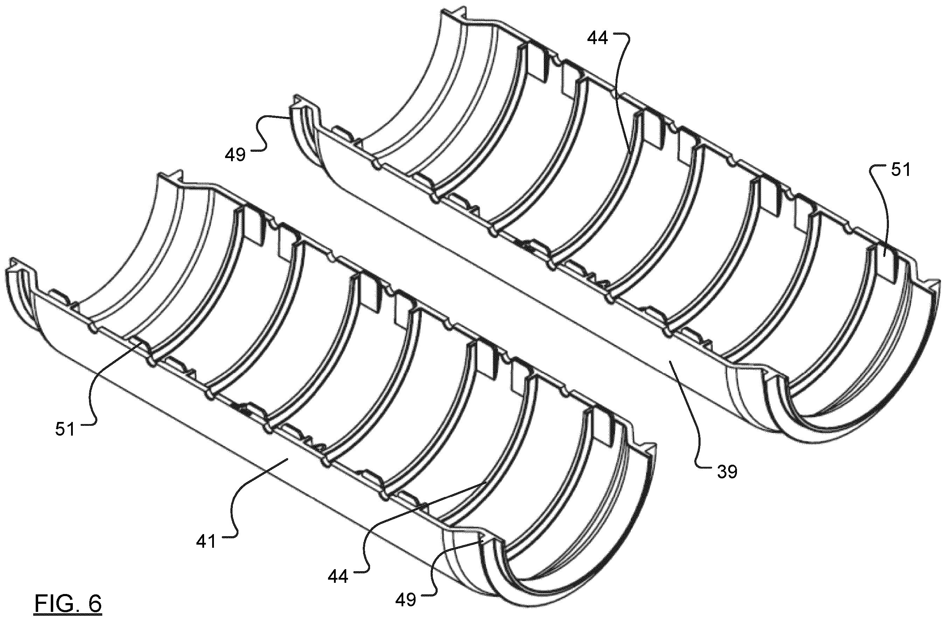

The animal tunnel length 37 shown in Figs. 4 and 5 comprises first and second semi-tubular (for example, semi-circular) tunnel portions 39, 41 that come together to form a tubular structure that provides a tunnel through which an animal can pass. In the preferred arrangement, for simplicity of manufacturing, the first and second semi-tubular portions are identical when laid side by side - as shown in Fig. 6. The tubular portions may be of a plastics material, preferably translucent so that an animal within the tunnel can see out (and the owner can see the animal within the tunnel).

In the preferred arrangement, the first and second semi-tubular portions 39, 41 can be separated so that the tubular tunnel can be cleaned. It is also preferred for the tunnel length to include a plurality of ventilation holes 43 so that air and easily pass into and out of the tube. The first and second semi-tubular portions 39, 41 - as best shown in Fig 5 - each include a plurality of arc-shaped ribs 44 that co-operate when the tubular portions are brought together to form a plurality of circumferential ribs that make it easier for an animal to pass through the tunnel (particularly if the tunnel is vertical).

As shown in Fig. 5, peripheral end regions 45 of the tunnel are radially narrowed to provide an entrance 47 to the tube that has a smaller diameter than the remainder of the tube between the end regions. A circumferential rib or ridge 49 extends radially outwardly from the aforementioned end regions 45 of the tunnel length, and is configured to be engaged by the tunnel engaging formations 9, 11 of the connector 1.

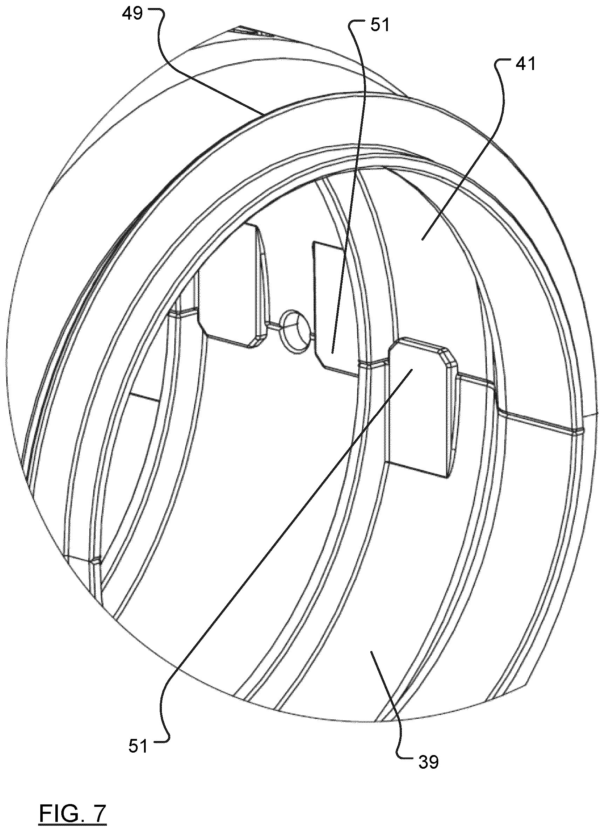

Referring again to Fig. 6, and also to Fig. 7 (which is an enlarged view of an end portion of a tunnel length with semi-tubular portions 39, 41 engaged), each semi-tubular portion 39, 41 includes a plurality of tabs 51 that extend tangentially beyond each semi-tubular portion to provide a two-part engagement mechanism that helps to keep the semi-tubular portions together. These tabs 51 co-operate, when the two semi-tubular portions are brought together as shown in Fig. 7, to help keep the semi-tubular portions together as the tabs of one portion frictionally engage with the inside of the peripheral wall of the other portion. In another envisaged arrangement, the semi-tubular portions may be provided with an engagement mechanism comprised of pegs and sockets that fit together or otherwise interengage when the two portions are brought together.

In an envisaged implementation, the rib or ridge 49 has an outer diameter B (Figs. 4 & 5) which is approximately equal to the diameter D of the annular peripheral wall 7, and greater than the distance A between the proximal end 19 and distal end 17 of the first segment 15 of the collar 5. As a consequence of this arrangement, the first segment 15 radially outwardly, and resiliently, deforms as the ribbed end region of a tunnel length is pushed into the space between the proximal and distal ends 19, 17 of the first segment 15.

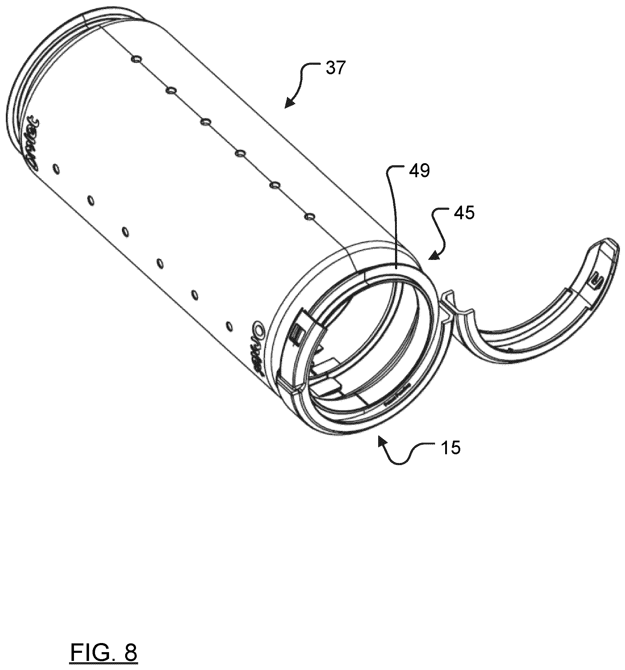

As the ribbed end region of the tunnel length is pushed further into the first segment 15 of the collar 5, the first segment 15 begins - as a result of its resilience - to contract radially inwardly until, as shown in Fig. 8, the ribbed end region 45 of the tunnel length is gripped within the first segment 15 of the collar 5 and securely coupled to the collar 5, even though the connector 1 is still in the open configuration. In this position, decoupling of the tunnel length and the connector 1 in an axial direction is resisted by the tunnel engaging formations of the collar which prevent the rib 49 from being pulled out of the collar 5.

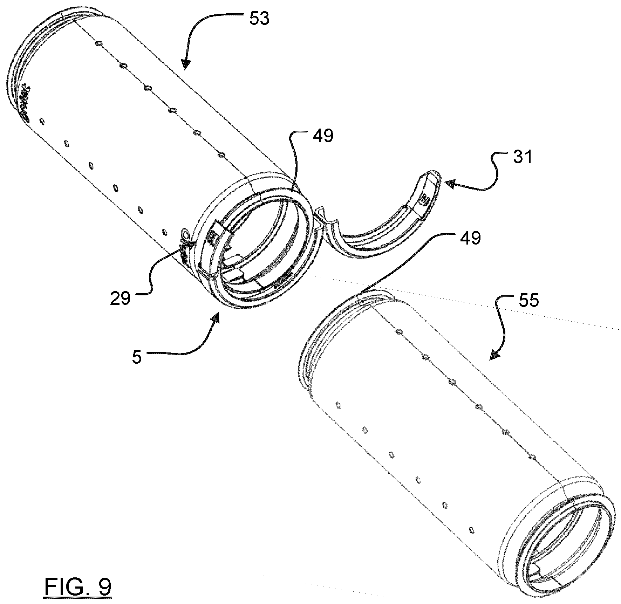

Referring now to Fig. 9, once the collar 5 has been coupled to a first tunnel length 53, a second tunnel length 55 can be pushed into the collar so that the ribs 49 of the first and second tunnel lengths 53, 55 lie between the first and second tunnel engaging formations of the collar. Once so arranged, the proximal end regions 29, 31 of the collar 5 can be brought together and the releasable two-part engagement mechanism can be engaged to retain the collar in the closed position, and securely couple the first and second tunnel lengths 53, 55 together.

In an envisaged implementation of the teachings of this disclosure a tunnel system for a pet enclosure is contemplated. The tunnel system comprises a plurality of tunnel lengths of the type described herein, which tunnel lengths can be coupled together by means of connectors of the type disclosed herein. The tunnel system contemplated may also comprise a pair of animal enclosure couplings that are connectable to the enclosure at spaced locations, an assembled tunnel being connectable between the animal enclosure couplings to provide a tunnel that extends between them. The animal enclosure couplings could also be connected to spaced enclosures, and an assembled tunnel may be connected between them the enclosures. The animal enclosure coupling could, in one illustrative implementation, be similar to that which is disclosed in United Kingdom Patent no. 2608959 - the entire contents of which are incorporated herein by reference as though they were set out in full herein.

In another contemplated arrangement, the tunnel system could be provided within an animal enclosure (without being coupled to the walls of the enclosure) to provide interest for the animal in the form of a tunnel through which the animal can travel.

It will be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst in the preferred arrangement the tunnel engaging formations each comprise a ridge or rib extending inwardly from the entirety of respective peripheral edges of the peripheral wall, it will be appreciated that the tunnel engaging formations could instead comprise a plurality of tabs extending inwardly from respective peripheral edges of the peripheral wall.

It should also be noted, that whilst the various implementations herein disclosed include generally straight tunnel lengths, this is not intended to be a limiting feature of the disclosure. Rather, it will be immediately apparent to persons of skill in the art that the tunnel lengths could be smoothly curved or angled (for example right-angled) to enable tunnels to be constructed that are not straight, for example tunnels that incorporate twists and turns. It is also anticipated that the tunnel lengths need not be wholly circular in transverse cross-section (i.e. in a direction roughly perpendicular to a long axis of the tunnel length). They could, for example, be oval - at least in part.

It should also be noted that whilst the accompanying claims set out particular combinations of features described herein, the scope of the present invention is not limited to the particular combinations hereafter claimed, but instead extends to encompass any combination of features herein disclosed.

Finally, it should be noted that any element in a claim that does not explicitly state "means for" performing a specified function, or "steps for" performing a specific function, is not to be interpreted as a "means" or "step" clause as specified in 35 U.S.C. Sec. 112, par. 6. In particular, the use of "step of" in the claims appended hereto is not intended to invoke the provisions of 35 U.S.C. Sec. 112, par. 6.

## Claims

1. An animal tunnel connector for connecting a first length of animal tunnel to a second length of animal tunnel, the connector comprising:
a collar comprising an annular peripheral wall, said collar including first and second segments each having a proximal end and a distal end, wherein the distal end of said first segment is movably coupled to the distal end of said second segment so that the collar can be opened and closed, the proximal ends of said first and second segments include respective parts of a releasable two-part engagement mechanism that can be engaged when the collar is closed to retain the collar in the closed position, and the first and second segments of said collar each include first and second tunnel engaging formations that enable the collar to be closed around and retain respective first ends of said first and second lengths of animal tunnel;
wherein the annular peripheral wall of the closed collar has a diameter D, and a distance A between the distal and proximal ends of the first segment is less than D;
the arrangement being such that said collar can be resiliently deformed to receive and retain a said first end of one of said lengths of animal tunnel pushed into said first segment to temporarily couple the collar to said one length of animal tunnel before the collar is coupled to the other said length of animal tunnel.

2. An animal tunnel connector according to Claim 1, wherein said first and second segments are each generally C-shaped.

3. An animal tunnel connector according to Claim 1 or 2, wherein the first segment - as measured from the distal end to the proximal end - comprises an arc having a length that is greater than πD/2.

4. An animal tunnel connector according to Claim 3, wherein the second segment - as measured from the distal end to the proximal end- comprises an arc having a length that is less than πD/2.

5. An animal tunnel connector according to Claim 4, wherein the second segment comprises - at least approximately - a half-circle, that is to say an arc extending through 180 degrees.

6. An animal tunnel connector according to Claim 5, wherein the first segment comprises an arc extending through more than 180 degrees, for example approximately 200 - 215 degrees (preferably c. 205 degrees).

7. An animal tunnel connector according to any preceding claim, wherein proximal end portions of said first and second segments are radially thinned in comparison to the remainder of said first and second segments, respectively.

8. An animal tunnel connector according to Claim 7, wherein said proximal end portions of said first and second segments overlap when the collar is in the closed position.

9. An animal tunnel connector according to Claim 8, the proximal end portion of said first segment includes a first part of said releasable two-part engagement mechanism, and the proximal end portion of said second segments includes a second part of said releasable two-part engagement mechanism, said first and second parts engaging as the collar is closed to retain the collar in the closed position.

10. An animal tunnel system, the tunnel system comprising:
a plurality of animal tunnel lengths, each said animal tunnel length comprising first and second tunnel portions that can be brought together to form a tubular structure that provides a tunnel through which an animal can pass, and
a plurality of animal tunnel connectors according to any of Claims 1 to 9,
the arrangement being such that the animal tunnel connectors can be used to connect adjacent pairs of animal tunnel lengths to form an animal tunnel for provision within an animal enclosure, connection between spaced locations of an animal enclosure, or between spaced animal enclosures.

11. An animal tunnel system according to Claim 10, further comprising first and second animal enclosure couplings that can be connected to one or more enclosures, an assembled tunnel being connectable between the animal enclosure couplings to provide a tunnel that extends between said animal enclosure couplings.

12. An animal tunnel system according to Claim 10 or 11, wherein the first and second tunnel portions of each said tunnel length are configured so that peripheral end regions of the tubular structure that is formed when the tunnel portions are brought together are radially narrowed to provide an entrance to the tunnel length that has a smaller diameter than the remainder of the tunnel length between the end regions.

13. An animal tunnel system according to Claim 12, further comprising a circumferential rib or ridge that extends radially outwardly from the aforementioned end regions of the tunnel length when the tunnel portions are brought together.

14. An animal tunnel system according to Claim 13, wherein said rib or ridge is configured to be engaged by at least one of the tunnel engaging formations of the animal tunnel connector of any of Claims 1 to 9.

15. An animal tunnel system according to Claim 14, wherein said circumferential rib or ridge has a diameter B that is, at least approximately, similar to the diameter D of said annular peripheral wall and greater than the distance A between the proximal and distal ends of the first segment of the collar.
